# DEMANDE DE BREVET EUROPEEN

(11) **EP 4 156 058 A1**
(43) Date de publication de la demande: **29.03.2023**
(21) Numéro de dépôt: 22192806.2
(22) Date de dépôt: 30.08.2022
(51) Int. Cl.: G06Q 10/20, G06Q 50/32, H04L 43/00

(54) **SYSTÈME DE SUPERVISION D'UN RÉSEAU CONSTITUÉ D´UNE PLURALITÉ DE DISPOSITIFS**

(30) Priorité: 27.09.2021 FR 2110141
(71) Demandeur: Nexans, 92400 Courbevoie (FR)
(72) Inventeur: SAGE, Jean-Jacques, 26790 Suze-la-Rousse (FR); BRIGOT, Mathieu, 91330 Yerres (FR)
(74) Mandataire: Ipsilon

(57) **Abrégé**

Dans ce système (10) de supervision d'un réseau constitué d'une pluralité de dispositifs (12), chaque dispositif (12) de la pluralité de dispositifs comporte au moins un capteur d'état (13) mesurant au moins un paramètre physique du dispositif (12) et le système comporte en outre une plateforme (14) de supervision communiquant avec l'au moins un capteur d'état (13) par l'intermédiaire d'un réseau de télécommunications (16).

## Description

La présente invention se rapporte à un système de supervision d'un réseau, ce réseau étant constitué d'une pluralité de dispositifs.

L'invention appartient au domaine de la supervision automatisée des réseaux.

L'opérateur d'un réseau n'a généralement pas la possibilité de surveiller correctement et complètement son réseau.

Par exemple, dans un réseau de télécommunications à fibres optiques, les technologies de fibre optique avec couplage empêchent d'avoir la connaissance de la localisation des défauts en aval des coupleurs.

En conséquence, un OCEN (Opérateur Commercial d'Envergure Nationale) ne réagit à une défaillance de son réseau que lorsque le client le signale, via une procédure de signalisation au service support donnant lieu à un enregistrement de ticket de service après-vente, nommé SIG (pour SIGnalisation client).

Or environ 80% des défaillances se situent sur le lien entre point de mutualisation et point de branchement et seulement 20% des défaillances se situent chez le client.

On connaît des analyseurs de réseau. Néanmoins, cette solution est insuffisante. Par exemple, dans les réseaux à fibres optiques, ces analyseurs de réseau sont intégrés dans les OLT/ONT (terminaisons optiques, en anglais « Optical Line Terminal » / « Optical Network Terminator ») et ne permettent pas de surveiller l'ensemble des dispositifs dont le réseau est constitué.

Il existe donc un besoin de déterminer la position exacte d'une panne sur le réseau, d'anticiper les pannes réseau, d'engendrer des arbres de défaillances automatisés et de raccourcir les délais de rétablissement du service après une panne. Cela vaut quel que soit le type de réseau considéré. Autrement dit, ce besoin ne se limite pas aux réseaux à fibres optiques.

La présente invention a pour but de remédier aux lacunes précitées de l'art antérieur.

Dans ce but, la présente invention propose un système de supervision d'un réseau constitué d'une pluralité de dispositifs, le système comportant la pluralité de dispositifs et étant remarquable en ce que chaque dispositif de la pluralité de dispositifs comporte au moins un capteur d'état mesurant au moins un paramètre physique du dispositif et en ce que le système comporte en outre une plateforme de supervision communiquant avec l'au moins un capteur d'état par l'intermédiaire d'un réseau de télécommunications.

Ainsi, la présente invention permet de surveiller l'état de l'ensemble des dispositifs dont le réseau est constitué. Cela permet également d'anticiper les pannes, de mettre en place une maintenance préventive et d'offrir une grande réactivité en cas de panne, par information du technicien éventuellement déjà présent sur site ou par information des opérateurs concernés.

Dans un mode particulier de réalisation, la plateforme de supervision comporte un moyen d'enregistrement d'interventions réalisées par des techniciens dans le réseau constitué de la pluralité de dispositifs.

Cela permet de conserver l'historique des interventions réalisées sur chacun des dispositifs constituant le réseau et donc d'améliorer la maintenance prédictive.

Dans un mode particulier de réalisation, la plateforme de supervision comporte en outre un moyen de détection et de localisation de panne dans le réseau constitué de la pluralité de dispositifs.

Cela permet de localiser précisément le ou les dispositifs affectés par les pannes et donc de réduire le temps de réaction avant une réparation.

Dans un mode particulier de réalisation, le réseau constitué de la pluralité de dispositifs est un réseau de télécommunications à fibres optiques et la pluralité de dispositifs comporte au moins un dispositif parmi un nœud de raccordement optique, un point d'épissurage, un point de mutualisation, un boîtier de pied d'immeuble, un point de branchement, un point de terminaison ou de démarcation de réseau.

Dans un mode particulier de réalisation, le réseau constitué de la pluralité de dispositifs est un réseau de télécommunications mobiles.

Dans un mode particulier de réalisation, le réseau constitué de la pluralité de dispositifs est un réseau de fourniture d'eau ou d'énergie.

Dans un mode particulier de réalisation, le réseau constitué de la pluralité de dispositifs est un réseau d'éclairage public.

Dans un mode particulier de réalisation, le réseau constitué de la pluralité de dispositifs est un réseau de signalisation routière.

### Brève description des dessins

D'autres aspects et avantages de l'invention apparaîtront à la lecture de la description détaillée ci-après de modes particuliers de réalisation, donnés à titre d'exemples nullement limitatifs, en référence aux dessins annexés, dans lesquels :

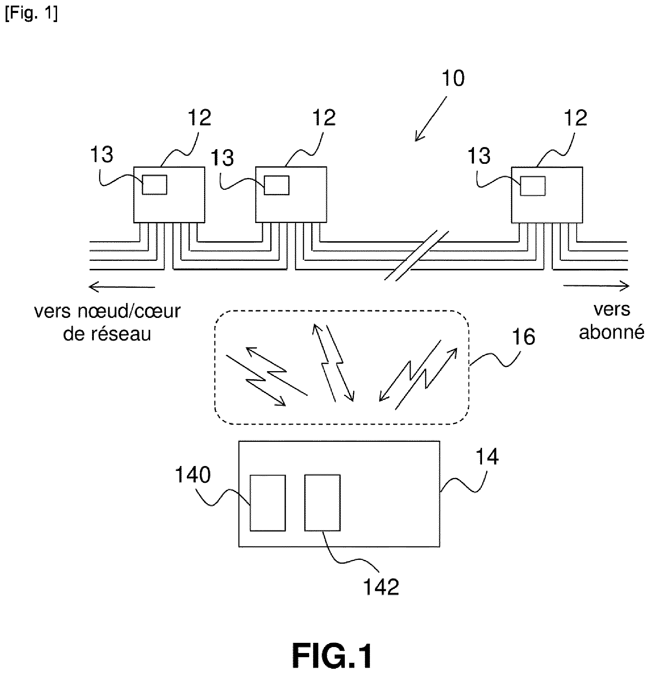

[Fig. 1] est une représentation schématique d'un système de supervision conforme à la présente invention, dans un mode particulier de réalisation.

### Description de mode(s) de réalisation

Comme le montre la figure 1, la présente invention considère un réseau constitué d'une pluralité de dispositifs 12.

Ce réseau peut être un réseau de télécommunications à fibres optiques, ou un réseau de télécommunications mobiles, ou un réseau de fourniture d'eau ou d'énergie (électricité ou gaz par exemple), ou un réseau d'éclairage public, ou encore un réseau de signalisation routière.

Dans un mode particulier de réalisation où il s'agit d'un réseau de télécommunications à fibres optiques, la pluralité de dispositifs 12 peuvent être un ou plusieurs des dispositifs suivants : nœud de raccordement optique, point d'épissurage, point de mutualisation, boîtier de pied d'immeuble, point de branchement, point de terminaison ou de démarcation de réseau.

Un système 10 de supervision d'un tel réseau comporte la pluralité de dispositifs 12.

Conformément à la présente invention, chaque dispositif 12 comporte un ou plusieurs capteurs d'état 13 qui mesurent un ou plusieurs paramètres physiques du dispositif 12.

A titre d'exemple nullement limitatif, ces paramètres physiques peuvent être mesurés par contact avec le dispositif 12 ou peuvent provenir de l'environnement du dispositif 12. A titre d'exemple nullement limitatif, le paramètre physique mesuré par un capteur d'état 13 peut être le degré d'humidité, la température ou l'occurrence de chocs, la qualité de l'air ou la détection de fumées.

Le dispositif 12 peut comporter en outre un moyen d'identification à distance du dispositif par voie électronique.

A titre d'exemple nullement limitatif, ce moyen d'identification peut être une étiquette NFC (communication en champ proche, en anglais « Near Field Communication ») ou RFID (identification par radiofréquences, en anglais « Radio Frequency IDentification »). Cette étiquette est par exemple directement imprimée sur le dispositif 12, ou figure sur une étiquette autocollante apposée par exemple à l'extérieur du dispositif 12.

De façon optionnelle, le dispositif 12, s'il se présente sous la forme d'un coffret ou d'une armoire, peut comporter en outre un dispositif de verrouillage intelligent, équipé d'une circuiterie électronique lui permettant d'être commandé à distance via un terminal de télécommunications éventuellement mobile. L'ouverture et la fermeture du dispositif 12 peuvent être conditionnées à l'exécution d'une procédure d'authentification de l'utilisateur. L'état ouvert ou fermé du dispositif 12 peut être mémorisé dans un registre distant. Le dispositif de verrouillage intelligent peut communiquer avec l'extérieur par exemple via la technologie NFC ou RFID, comme le moyen d'identification à distance du dispositif 12.

La figure 1 montre que les dispositifs 12 sont reliés, de façon connue en soi, à un réseau, d'une part à un nœud appartenant au cœur du réseau et d'autre part, à un équipement d'abonné, c'est-à-dire à un équipement d'usager du réseau.

Conformément à la présente invention, le système 10 de supervision du réseau comporte en outre une plateforme 14 de supervision qui communique avec les capteurs d'état 13 par l'intermédiaire d'un réseau de télécommunications 16.

Par exemple, si le dispositif 12 comporte un moyen d'identification à distance du boîtier, la plateforme 14 de supervision comporte un moyen de lecture adapté à émettre et recevoir des signaux en direction de et en provenance du dispositif 12 et en provenance du ou des capteurs d'état 13.

En outre, la plateforme 14 de supervision peut comporter un moyen 140 d'enregistrement d'interventions réalisées par des techniciens dans le réseau constitué de la pluralité de dispositifs 12. Le moyen 140 d'enregistrement mémorise par exemple la date, l'heure et la durée des interventions, les données d'identification du technicien qui est intervenu et les informations d'identification du dispositif 12 concerné ainsi que la valeur des paramètres physiques mesurés par le ou les capteurs d'état 13 en début et en fin d'intervention.

La plateforme 14 de supervision peut également comporter un moyen 142 de détection et de localisation de panne survenant dans le réseau constitué de la pluralité de dispositifs 12.

La plateforme 14 de supervision sait alors associer un état particulier d'un capteur d'état 13 à une panne, soit grâce à une base de données locale ou distante répertoriant des plages de valeurs du capteur d'état 13 en fonctionnement normal, soit par communication avec le système d'information de l'opérateur de l'infrastructure considérée.

Ainsi, dans le cas où la panne est associée à une intervention en cours, le système 10 de supervision engendre un message d'information à destination du technicien sur site pour qu'il corrige le défaut. Dans le cas où la panne n'est pas associée à une intervention en cours, le système 10 de supervision engendre un message d'information à destination de la maintenance de l'opérateur de l'infrastructure considérée, à partir des enregistrements effectués par le moyen 140 d'enregistrement et en utilisant éventuellement en outre un modèle d'analyse mathématique qui calcule les meilleures probabilités de panne, par exemple sur la base de la fréquence des pannes.

## Revendications

1. Système (10) de supervision d'un réseau constitué d'une pluralité de dispositifs (12), ledit système (10) comportant ladite pluralité de dispositifs (12) et étant **caractérisé en ce que** chaque dispositif (12) de ladite pluralité de dispositifs comporte au moins un capteur d'état (13) mesurant au moins un paramètre physique dudit dispositif (12) et **en ce que** ledit système (10) comporte en outre une plateforme (14) de supervision communiquant avec ledit au moins un capteur d'état (13) par l'intermédiaire d'un réseau de télécommunications (16).

2. Système (10) selon la revendication 1, **caractérisé en ce que** ladite plateforme (14) de supervision comporte un moyen (140) d'enregistrement d'interventions réalisées par des techniciens dans ledit réseau constitué de ladite pluralité de dispositifs (12).

3. Système (10) selon la revendication 1 ou 2, **caractérisé en ce que** ladite plateforme (14) de supervision comporte en outre un moyen (142) de détection et de localisation de panne dans ledit réseau constitué de ladite pluralité de dispositifs (12).

4. Système (10) selon la revendication 1, 2 ou 3, **caractérisé en ce que** ledit réseau constitué de ladite pluralité de dispositifs (12) est un réseau de télécommunications à fibres optiques et ladite pluralité de dispositifs (12) comporte au moins un dispositif parmi un nœud de raccordement optique, un point d'épissurage, un point de mutualisation, un boîtier de pied d'immeuble, un point de branchement, un point de terminaison ou de démarcation de réseau.

5. Système (10) selon la revendication 1, 2 ou 3, **caractérisé en ce que** ledit réseau constitué de ladite pluralité de dispositifs (12) est un réseau de télécommunications mobiles.

6. Système (10) selon la revendication 1, 2 ou 3, **caractérisé en ce que** ledit réseau constitué de ladite pluralité de dispositifs (12) est un réseau de fourniture d'eau ou d'énergie.

7. Système (10) selon la revendication 1, 2 ou 3, **caractérisé en ce que** ledit réseau constitué de ladite pluralité de dispositifs (12) est un réseau d'éclairage public.

8. Système (10) selon la revendication 1, 2 ou 3, **caractérisé en ce que** ledit réseau constitué de ladite pluralité de dispositifs (12) est un réseau de signalisation routière.
